# EUROPEAN PATENT APPLICATION

(11) **EP 3 076 154 A1**
(43) Date of publication of application: **05.10.2016**
(21) Application number: 16161593.5
(22) Date of filing: 22.03.2016
(51) Int. Cl.: G01N 3/42, G01N 3/54, G01N 3/62

(54) **INDENTER**

(30) Priority: 31.03.2015 GB 201505561
(71) Applicant: Micro Materials Ltd, Ellice Way, Wrexham LL13 7YL (GB)
(72) Inventor: Smith, Dr James, Rhuthin, LL15 2DE (GB); Harris, Adrian Jeffrey, Wrexham, LL13 7EQ (GB)
(74) Representative: Hamilton, Alistair

(57) **Abstract**

An indenter an a method for making an indenter are disclosed. The indenter comprises an indenting crystal (12) secured by an adhesive (14) to a holder (10) wherein the adhesive comprises a glass or ceramic composition that is a ceramic frit. That is, he adhesive comprises a glass or ceramic composition that has been caused to flow by heating to a sufficiently high temperature to form a bond with the indenter crystal and the holder material. In an example, the frit comprises: Feldspar ∼40%, Silica ∼30%, Calcium carbonate ∼20% and Kaolin ∼10%. This formulation starts to flow when heated to a temperature in the approximate range 1200-1300°C.

## Description

This invention relates to indenters.

Indentation testing is widely used for determination of the hardness and elastic modulus of materials such as metals, ceramics and plastics. Since such mechanical properties are temperature-dependent, and service temperatures are often elevated, there is a need to perform indentation tests across a wide temperature range. Indentation testing typically involves applying an indenter to a test subject with a known force and analysing the surface deformation caused to the test subject. The indenter typically comprises a hard crystal, typically diamond or sapphire, that is mounted on a holder, which holder can be mounted in a testing machine.

Hitherto, it has been difficult or impossible to test at the highest desired temperatures due to the arrangements commonly used to secure indentation crystals to their carriers. These arrangements typically include brazing and adhesion using ceramic cements. Brazing alloys, however, cannot withstand the highest temperatures desired, and may also evaporate in a vacuum. Ceramic cements generally have limited strength as well as limited adhesion to some indenter materials.

Known ceramic cements cure through evaporation of constituents from the cement or through an internal chemical reaction. Evaporative cements are generally applicable where only a small volume of adhesive is required. Chemical setting adhesives are prone to ageing of the pre-mixed ingredients (e.g., through water absorption and particle agglomeration), and to porosity of the ceramic body. Pores and similar defects in the ceramic body lead to weakness.

An aim of this invention is to provide an indenter that can operate reliably at temperatures above those that can be endured by conventional indenters.

To this end, from a first aspect, the present invention provides an indenter comprising an indenting crystal secured by an adhesive to a holder, in which the adhesive comprises a glass or ceramic composition that is a ceramic frit.

Such an adhesive does not cure in the conventional sense (i.e. through evaporation or chemical reaction), but instead flows to form an intimate bond with the crystal.

The adhesive typically forms a mechanical bond with the crystal. Mechanical bonding occurs through mechanical interlocking of the adhesive to surface defects

Alternatively or additionally, the adhesive may form a bond either with or without undergoing a surface chemical reaction with the crystal.

The adhesive may be a frit that includes a source of silica and a fluxing agent that serves to reduce the melting temperature of the composition. There may also be a stiffening agent that serves to increase the viscosity of the melt. For example, the frit may include a combination of feldspar, silica, calcium carbonate and kaolin. In that example, feldspar provides stiffener, glass former and minor flux components, calcium carbonate is a flux, and kaolin provides both stiffener and glass former components. For indenter applications, it is advantageous to know the eutectic composition and the eutectic melting temperature of the frit.

The holder may be made from a range of ceramic materials. A preferred material is high-density alumina. The holder may be fabricated by assembling it from component parts using a high-temperature ceramic adhesive. Alternatively, it may be a monolithic component that is hot pressed and sintered.

From a second aspect, this invention provides a method of making an indenter comprising placing a crystal in a holder; at least partially surrounding the crystal with an adhesive that includes a glass former; applying heat to cause the adhesive to flow around and make close contact with the crystal and the holder.

The adhesive may be formed by fusing inorganic constituents into a glass and then mechanically reducing the glass to a powder.

Typically, a force is applied to the crystal while it is being heated to prevent it floating on the surface while the adhesive is in a liquid state.

From another aspect, the present invention provides an indenter comprising an indenting crystal secured by an adhesive to a holder, in which the adhesive comprises a glass or ceramic composition that has been caused to flow by heating to a sufficiently high temperature to form a bond with the indenter crystal and the holder material.

An embodiment of the invention will now be described in detail, by way of example, and with reference to the accompanying drawings, in which:
Figure 1 shows an indenter embodying the invention prior to adhesion during manufacture;
Figure 2 shows the indenter of Figure 1 undergoing heating and melting of the adhesive during manufacture; and
Figure 3 is an example of a ternary phase diagram of ceramic frits suitable for use in embodiments of the invention.

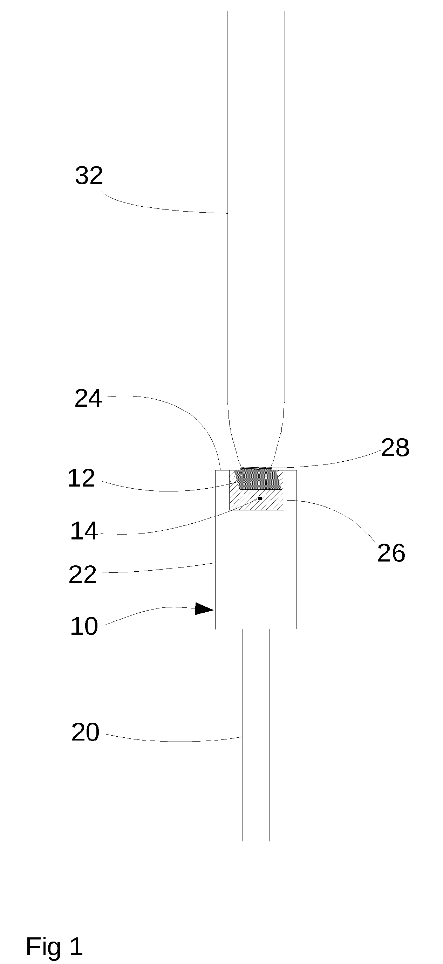

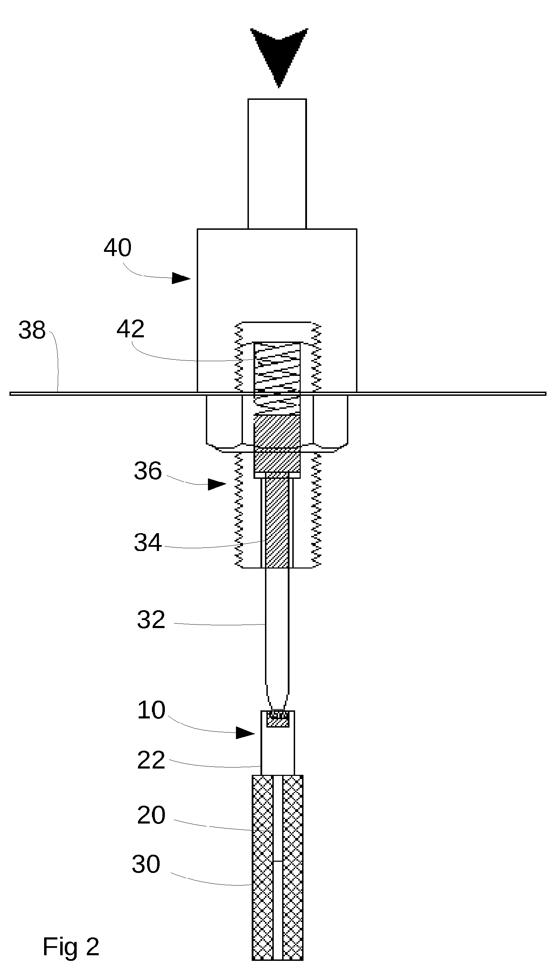

With reference to Figures 1 and 2, an indenter comprises a holder 10 on which is carried a crystal 12 secured by a body of adhesive 14. In this embodiment, the crystal is diamond.

In this embodiment, the holder 10 is formed as a unitary sintered component. However, it could equally be fabricated from a plurality of components, interconnected by a suitable high-temperature adhesive. The holder 10 comprises a cylindrical stem 20 on which is formed a coaxial cylindrical head 22 of larger diameter. The stem 20 is shaped and dimensioned to interface with a testing machine. The head 22 has a flat surface 24 at an end opposite the stem 20. A cylindrical recess 26 is formed coaxially in the head 10, the recess 26 opening to the flat surface 24, which, in this embodiment, is approximately 2 mm in diameter and 2 mm deep.

The crystal 12 is located within the recess such that the crystal surface is coplanar with the flat surface 24. The portion of the crystal 12 that is within the recess 26 is surrounded by the adhesive 14 to completely fill the recess 26.

The holder 10 can have many alternative configurations: substantially any arrangement that allows a crystal to be bonded to it is suitable. For example, the holder may be a simple cylinder, the crystal being bonded to end surface of it.

In this embodiment, the adhesive is a ceramic frit, formulated as follows:
Feldspar ∼40%
Silica ∼30%
Calcium carbonate ∼20%
Kaolin ∼10%.

This formulation starts to flow when heated to a temperature in the approximate range 1200-1300°C.

During the process of bonding the crystal into the holder, as will be described below, it is necessary to apply a continuous force to the crystal in order to embed it in the ceramic frit. Without this force, the crystal tends to float on the molten surface and generally takes up a random orientation. The apparatus employed for applying this force is depicted in Fig. 2, and its operation will be described in due course.

The apparatus comprises a ceramic tube 30 that has a bore into which the stem 20 of the holder 10 is a close sliding fit. Directly above the tube 30 is a threaded guide component 36 secured to the underside of a heat shield 38. The apparatus includes a rod 32, formed of alumina in this embodiment, that is generally cylindrical, with a taper that extends to a flat tip, the tip diameter being slightly smaller than that of the crystal. The diameter of the rod 32 is chosen to be slightly less than the diameter of the recess to ensure that the adhesive is retained in the well, by minimising extrusion, and to reduce porosity in the adhesive, thus increasing the effective bond area. Remote from the working surface, the rod 32 has a ceramic cylindrical slider 34 that fits closely within the bore of the guide component 36. A body 40 is located over the guide component 36 on the upper surface of the heat shield 38, the body having a recess. An aperture is formed in the heat shield 38 immediately above the slider 34. A spring 42 extends through the aperture such that it can act in compression to transmit a downward force from the body 40 to the slider 34.

The force applied by the spring 42 can be adjusted by means of changing the position of the guide component 36 within the body 40. The apparatus may be calibrated relative to the tip position by clamping the body in a convenient manipulation device and lowering the tip onto a spring balance.

A method of construction of the indenter, and apparatus for use in that method, will now be described.
1. A volume of the frit described above, in fine powder form, is mixed with 25% by weight of water to form a thick paste. The recess 26 is filled with ceramic frit paste such that the surface of the paste is approximately coplanar with the surrounding surface 24.
2. The indenter crystal is placed face-down on a flat plastic surface.
3. The filled indenter holder is supported upside-down in a suitable manipulation device and aligned such that the crystal is centrally located beneath the filled recess 26.
4. The indenter holder 10 is pressed downwards until the surface 24 is in contact with the plastic surface and the crystal 10 is embedded in the frit paste. Some increase in the density of the frit paste will occur. Some extrusion of the paste out of the recess 26 will also take place and this excess is simply wiped off to leave the flat surface 24 clean.
5. The frit paste is dried at room temperature overnight, or subjected to a slightly elevated temperature for several hours under a heat lamp to leave a completely dry body.
6. The holder 10 is then supported by inserting its stem 20 into a ceramic tube 30 such that the head 22 is supported on an end surface of the tube 30.
7. With the holder 10 supported in the ceramic tube 30, as shown in Fig 2, and the force application tool supported in an XYZ manipulation device, the indenter crystal is moved such that it is located directly beneath the flat tip of the ceramic rod 30.
8. A small amount of ceramic adhesive 28, such as an alumina-based adhesive, is applied to the tip of the ceramic rod 32 and the rod is immediately lowered onto the crystal with a force of approximately 1 N. The adhesive is allowed to cure.
9. Taking care not to disturb the setup that has been achieved in the above steps, the holder 10 is heated to a temperature sufficient to melt the ceramic frit. When this happens, the applied force causes the indenter crystal to sink to the bottom of the cement-filled recess 26. Heat may be applied from a high temperature torch using gas (e.g., a fuel gas comprising a mix of methylacetylene and propadiene) with a neutral or slightly reducing flame, the latter serving to minimise oxidation of the crystal material if this is susceptible to oxidation. The heat shield 38 shown in Fig. 2 prevents convective heating of the manipulation mechanism situated above it.
10. After cooling through natural convection, the force application tool is easily removed by causing the ceramic cement between the rod 32 and the crystal 12 to fracture using minimal force sideways force to leave the crystal 12 securely bonded within the holder 10.

The indenter is now ready for grinding and polishing using conventional methods.

Prior to assembly, the lower part of the rod 32 may be coated with carbon, for instance in the form of e.g., water-based colloidal graphite (known as Aquadag). This can minimise reaction between the frit and the rod 32 thereby further assisting removal of the rod following solidification of the frit.

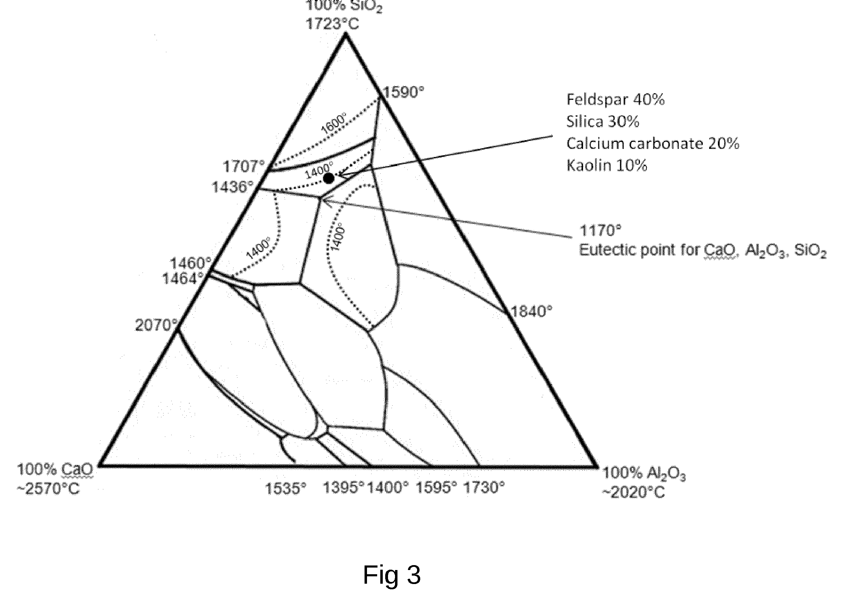

With reference to Figure 3, the preferred composition of frits for use in embodiments of the invention will be described.

The combination of two or more material components which has the lowest possible melting temperature is called the "eutectic composition".

Consider the CaO + Al₂O₃ + SiO₂ eutectic, which has a melting point of 1170°C that is substantially lower than the melting points of the individual components. The composition of the eutectic by weight is 23.25% CaO, 14.75% Al₂O₃ and 62% SiO₂. For such a system, with three components, the phase diagram is presented in the form of a triangle as shown in Figure 3. For a complete description, temperature would be plotted on a vertical axis.

Each individual component is placed at an apex of the triangle. If required, constant melting temperature contour lines can be drawn within the various phase fields. Four examples are shown. The borders between phase fields are the minimum melting temperatures between those phases. Each phase field has a single eutectic point.

The eutectic composition melts at a single, well-defined temperature. For indentation applications it is important to know the temperature within a phase field at which melting will begin. To preclude movement of the indenter during indentation testing, this particular temperature should not be exceeded. Compositions close to the eutectic will soften and melt over a temperature range that may be acceptable in practice provided that account is taken of the eutectic melting point. Greater variations from the eutectic composition will result in softening over a wider temperature range before complete melting takes place. It is important to achieve sufficient fluidity that all surfaces are in contact with liquid, and that the liquid viscosity is sufficiently low that any surface diffusion, chemical reaction or wetting processes necessary for bonding can occur. For instance, bulk Al₂O₃ migrates into molten Al₂O₃+SiO₂+CaO at a rate that depends on melt viscosity, which clearly is relevant for sapphire (Al₂O₃) indenter crystals in Alumina crystal holders. Notwithstanding the theoretical approach to determining the formulation of an adhesive, the bonding efficacy of a particular set of process parameters can be determined experimentally.

For lower-temperature applications, alumina and silica are combined with fluxes sodium, potassium or lithium oxides:

Na₂O+Al₂O₃+SiO₂, M.Pt. 732°C

K₂O+Al₂O₃+SiO₂, M.Pt. 695°C

LiO+Al₂O₃+SiO₂, M.Pt. 975°C

For higher-temperature applications, alumina and silica are combined with fluxes calcium, barium, magnesium or strontium oxides:

CaO+Al₂O₃+SiO₂, M.Pt. 1170°C

BaO+Al₂O₃+SiO₂, M.Pt. 1250°C

MgO+Al₂O₃+SiO₂, M.Pt. 1355°C

SrO+Al₂O₃+SiO₂, M.Pt. 1400°C

Generally, the frit will not be produced from the pure components listed above, but rather from various minerals that upon heating effectively convert to, for example, CaO, Al₂O₃ and SiO₂. The specific minerals selected may lead to small upward departures from the minimum eutectic temperature, as shown for feldspar + silica + calcium carbonate + kaolin in Figure 3. When plotting such points it is conventional to group any minor flux components, such as the relatively small concentrations of sodium and potassium oxides in feldspar, into an effective CaO concentration.

## Claims

1. An indenter comprising an indenting crystal (12) secured by an adhesive (14) to a holder (10), **characterised in that** the adhesive comprises a glass or ceramic composition that is a ceramic frit.

2. An indenter according to claim 1 in which bond is a mechanical and/or a chemical bond.

3. An indenter according to any preceding claim in which the frit includes a fine powder comprising a fused mixture of a glass former and other inorganic compounds.

4. An indenter according to any preceding claim in which the frit includes a source of silica, and a fluxing agent that serves to reduce the melting temperature of the composition.

5. An indenter according to any preceding claim in which the frit further includes a stiffening agent that serves to increase the viscosity of the melt.

6. An indenter according to any preceding claim in which the frit includes a combination of some or all of feldspar, silica, calcium carbonate and kaolin.

7. An indenter according to any preceding claim in which the frit is a eutectic composition of its components.

8. An indenter according to any preceding claim in which the holder is made from a ceramic material.

9. An indenter according to claim 8 in which the holder is made from high-density alumina.

10. An indenter according to any preceding claim in which the holder is fabricated by assembling it from component parts using a high-temperature ceramic adhesive.

11. An indenter according to any one of claims 1 to 9 in which the holder is a monolithic component.

12. A method of making an indenter comprising placing a crystal (12) in a holder (10); **characterised by** at least partially surrounding the crystal with an adhesive (14) that includes a glass former; applying heat to cause the adhesive to flow around and make close contact with the crystal and the holder.

13. A method of making an indenter according to claim 12 in which the adhesive is formed by fusing inorganic constituents into a glass and then mechanically reducing the glass to a powder.

14. A method of making an indenter according to claim 12 or claim 13 in which a force is applied to the crystal while it is being heated to prevent it floating on the molten adhesive.

15. A method of making an indenter according to any one of claims 12 to 14 in which the holder is formed by hot pressing and/or sintering.
